# EUROPÄISCHE PATENTSCHRIFT

(11) **EP 2 350 701 B1**
(45) Veröffentlichungstag und Bekanntmachung des Hinweises auf die Patenterteilung: **10.12.2014**
(21) Anmeldenummer: 09740133.5
(22) Anmeldetag: 23.10.2009
(51) Int. Cl.: G01V 3/165

(54) **ORTUNGSGERÄT**
LOCATING DEVICE
APPAREIL DE LOCALISATION

(30) Priorität: 27.10.2008 DE 102008043190
(43) Veröffentlichungstag der Anmeldung: 03.08.2011
(73) Patentinhaber: Robert Bosch GmbH, 70442 Stuttgart (DE)
(72) Erfinder: KRAPF, Reiner, 72770 Reutlingen (DE); HAASE, Bjoern, 70184 Stuttgart (DE); RENZ, Kai, 70771 Leinfelden-Echterdingen (DE)
(86) Internationale Anmeldenummer: PCT/EP2009/063944
(87) Internationale Veröffentlichungsnummer: WO 2010/049351

(56) Entgegenhaltungen:
- EP-A- 1 341 005
- DE-A1-102006 025 861

## Beschreibung

### Stand der Technik

Die Erfindung geht aus von einem Ortungsgerät nach dem Oberbegriff des Anspruchs 1.

Es ist bereits ein Ortungsgerät, insbesondere ein handgeführtes Ortungsgerät, mit einer Ortungseinheit, die zu einer Erfassung eines Vorhandenseins eines in einem Untersuchungsobjekt angeordneten Gegenstands mittels eines Untersuchungssignals vorgesehen ist, aus EP 1341005 bekannt. Zudem weist das Ortungsgerät eine Bewegungssensoreinheit auf, die zu einem Erfassen wenigstens einer Bewegungskenngröße entlang zumindest einer Bewegungsrichtung vorgesehen ist.

### Offenbarung der Erfindung

Die Erfindung geht aus von einem Ortungsgerät, insbesondere einem handgeführten Ortungsgerät, mit einer Ortungseinheit, die zu einer Erfassung eines Vorhandenseins eines in einem Untersuchungsobjekt angeordneten Gegenstands mittels eines Untersuchungssignals vorgesehen ist, und einer Bewegungssensoreinheit, die dazu vorgesehen ist, wenigstens eine Bewegungskenngröße entlang zumindest einer Bewegungsrichtung zu erfassen.

Es wird vorgeschlagen, dass das Ortungsgerät eine Auswerteeinheit aufweist, die dazu vorgesehen ist, die Bewegungskenngröße und zumindest eine Ortungskenngröße der Ortungseinheit miteinander auszuwerten. In diesem Zusammenhang soll unter "vorgesehen" insbesondere speziell ausgestattet und/oder speziell ausgelegt und/oder speziell programmiert verstanden werden. Die Ortungseinheit kann hierbei einen Induktivsensor und/oder Kapazitivsensor und/oder einen 50/60Hz-Sensor und/oder einen Radarsensor und/oder einen IR-Sensor und/oder weitere, dem Fachmann als sinnvoll erscheinende Sensoren zu einer Erfassung von in dem Untersuchungsobjekt angeordneten Gegenständen aufweisen. Die Ortungskenngröße der Ortungseinheit kann von einer Spannungskenngröße und/oder eine Dielektrizitätskenngröße und/oder einer Stromkenngröße und/oder weiteren, dem Fachmann als sinnvoll erscheinenden Kenngrößen gebildet sein. Die Bewegungssensoreinheit kann alle, dem Fachmann als sinnvoll erscheinende Bewegungssensoren umfassen, die eine Bewegung und/oder eine Beschleunigung des Ortungsgeräts erfassen. Vorteilhafterweise weist die Bewegungssensoreinheit einen Beschleunigungssensor und/oder einen optischen Sensor und/oder einen mechanischen Sensor auf. Der Beschleunigungssensor kann beispielsweise von einem MEMS-Sensor (Micro-Electro-Mechanical System) gebildet sein, welcher eine Beschleunigung des Ortungsgeräts in Spannungswerten ausgibt und für eine Datenverarbeitung erfassbar macht. Der optische Sensor kann eine Funktionsweise im Wesentlichen analog beispielsweise einer optischen Computermaus aufweisen. Der mechanische Sensor kann von einem Sensor im Wesentlichen analog einer Kugel-Computermaus und/oder von einem Vibrations- und/oder Neigungssensor gebildet sein. Die Bewegungskenngröße kann hierbei von einer Kenngröße einer Spannung und/oder einer optischen Kenngröße und/oder einer Kenngröße eines Neigungswinkels und/oder weiteren, dem Fachmann als sinnvoll erscheinenden Bewegungskenngrößen gebildet sein. Unter einer "Auswerteeinheit" soll in diesem Zusammenhang insbesondere eine Einheit verstanden werden, die von einer Recheneinheit und/oder einer Kontrolleinheit gebildet sein kann, wobei die Auswerteeinheit sowohl von einem Prozessor allein als auch insbesondere von einem Prozessor und weiteren Elektronikbauteilen, wie beispielsweise einem Speichermittel, gebildet sein kann. Besonders vorteilhaft kann die Auswerteeinheit von einem Mikrokontroller oder einer digitalen Datenauswertung gebildet sein, wobei vorteilhafterweise ein Analog-Digital-Wandler der Auswerteeinheit vorgeschaltet angeordnet ist.

Durch die erfindungsgemäße Ausgestaltung können Daten der Ortungseinheit vorteilhaft ortsaufgelöst bearbeitet werden und ein leistungsfähiges Ortungsgerät mit einer hohen Anwenderfreundlichkeit bzw. einem hohen Bedienkomfort für einen Bediener des Ortungsgeräts vorteilhaft erreicht werden. Es kann zudem eine besonders schnelle und aufeinander abgestimmte Datenauswertung der unterschiedlichen Kenngrößen erfolgen und damit einhergehend eine schnelle Erfassung einer inneren Struktur des Untersuchungsobjekts, wie beispielsweise einer Wand. Insbesondere kann eine vorteilhafte Unterscheidung von unerwünschten Störsignalen, die beispielsweise durch ein Verkippen des Ortungsgeräts und/oder durch Wandinhomogenitäten hervorgerufen werden können, und einem von einem Gegenstand innerhalb des Untersuchungsobjekts resultierenden Messsignal in der Auswerteeinheit erreicht werden.

Ferner wird vorgeschlagen, dass die Auswerteeinheit dazu vorgesehen ist, mittels einer Ortungskenngröße der Ortungseinheit und der Bewegungskenngröße die Ortungseinheit zumindest teilweise selbsttätig zu kalibrieren. Es kann hierbei eine Kalibrierung, insbesondere eine zeitaufwendige Kalibrierung, der Ortungseinheit bzw. des Ortungsgeräts durch den Bediener vorteilhaft entfallen. Zudem kann eine Fehlkalibrierung, wie beispielsweise bei einem Aufsetzen eines herkömmlichen Ortungsgeräts auf einer Oberfläche einer Wand mit insbesondere einer inhomogenen Struktur, vorteilhaft verhindert und damit einhergehende Fehlmessungen zumindest reduziert werden. Besonders vorteilhaft ist die Auswerteeinheit zu einem automatischen Kalibrieren der Ortungseinheit zu Beginn eines Messvorgangs vorgesehen.

In einer vorteilhaften Weiterbildung wird vorgeschlagen, dass die Auswerteeinheit dazu vorgesehen ist, einen dynamischen Schwellenwert für eine Messung abhängig von einer Ortungskenngröße der Ortungseinheit und/oder der Bewegungskenngröße einzustellen. In diesem Zusammenhang soll unter einem "Schwellenwert" insbesondere ein Wert für eine untere Grenze der Ortungskenngröße verstanden werden, der eine vorteilhafte Gegenstandserkennung und zugleich eine vorteilhafte Unterdrückung von Rauschsignalen und/oder Untergrundsignalen ermöglicht, so dass eine für einen Bediener vorteilhafte Ausgabe eines Ortungsvorgangs bzw. eines Messergebnisses erreicht werden kann. Des Weiteren soll unter einem "dynamischen Schwellenwert" insbesondere ein Schwellenwert verstanden werden, der insbesondere von der Auswerteeinheit insbesondere stets an aktuelle Sensorsignale und/oder Ortungskenngrößen und/oder der Bewegungskenngröße angepasst wird. Vorzugsweise erfolgt die Einstellung des Schwellenwerts selbsttätig durch die Auswerteeinheit während eines Messvorgangs. Es kann durch diese Ausgestaltung der Erfindung eine präzise Erfassung bzw. eine Messung von Gegenständen innerhalb des Untersuchungsobjekts erreicht werden und eine unerwünschte Fehlinterpretation der Ortungskenngrößen zumindest reduziert werden.

Weiterhin wird vorgeschlagen, dass die Auswerteeinheit zumindest ein Speichermittel aufweist, das zu einer Speicherung von einer Ortungskenngröße der Ortungseinheit und/oder der Bewegungskenngröße vorgesehen ist. Es kann hierbei während eines Messvorgangs mittels des Ortungsgeräts, insbesondere bei einem mehrmaligen Überfahren einer gleichen Wandfläche, vorteilhaft eine Ortsinformation von in der Wand befindlichen Gegenständen und/oder von Wandinhomogenitäten gespeichert werden und damit ein Messvorgang und/oder eine Anzeige einer Anzeigeeinheit des Ortungsgeräts auf den Gegenstand abgestimmt werden.

Es wird ferner vorgeschlagen, dass das Ortungsgerät eine Anzeigeeinheit mit einem Anzeigebereich aufweist, wobei die Auswerteeinheit dazu vorgesehen ist, den Anzeigebereich zumindest teilweise selbsttätig an die Ortungskenngröße anzupassen. In diesem Zusammenhang soll unter einer "Anzeigeeinheit" insbesondere eine Einheit verstanden werden, die im Betrieb der Ortungseinheit zu einer optischen Ausgabe von Messergebnissen an einen Bediener vorgesehen ist. Vorzugsweise umfasst die Anzeigeeinheit ein Anzeigemittel und/oder ein Ausgabemittel, wie beispielsweise ein Display und/oder weitere, dem Fachmann als sinnvoll erscheinende Ausgabemittel. Des Weiteren soll unter einem "Anzeigebereich" insbesondere ein Bereich der Anzeigeeinheit verstanden werden, der abhängig von einer Größe, insbesondere einer Amplitude, eines Messsignals variiert werden kann, wobei für eine Anzeige von Messsignalen mit kleiner Amplitude eine größere Skalierung verwendet werden kann als für eine Anzeige von Messsignalen mit einer großen Amplitude. Es kann hierbei eine detailgetreue Darstellung der unterschiedlichen Messsignale erreicht werden und ein manuelles Umschalten des Anzeigebereichs kann vorteilhaft vermieden werden. Zudem kann eine für einen Bediener vorteilhafte Ausgabe eines Ortungsvorgangs erreicht werden.

Besonders vorteilhaft ist die Bewegungssensoreinheit dazu vorgesehen, eine Bewegung entlang zumindest zwei Bewegungsrichtungen und besonders bevorzugt entlang drei Bewegungsrichtungen zu erfassen. Vorzugsweise sind die zumindest zwei bzw. die drei Bewegungsrichtungen jeweils orthogonal zueinander ausgerichtet. Es kann hierbei vorteilhaft eine Bewegung des Ortungsgeräts in einem dreidimensionalen Raum erfasst werden und dabei einzelne Bewegungsabläufe des Ortungsgeräts, wie beispielsweise ein Aufsetzen des Ortungsgeräts auf einer Wand, eine Annäherung des Ortungsgeräts an die Wand, ein Bewegen des Ortungsgeräts auf der Wandoberfläche, ein Richtungswechsel des Ortungsgeräts bei einem Bewegen usw., vorteilhaft erfasst und voneinander unterschieden werden und bei der Auswertung der Ortungskenngrößen vorteilhaft berücksichtigt werden.

Ferner wird vorgeschlagen, dass die Ortungseinheit zumindest zwei Sensorelemente aufweist, wodurch eine redundante und insbesondere effektive Erkennung von Gegenständen erfolgen kann. Insbesondere kann hierbei eine Unterscheidung von Gegenständen und Störsignalen, wie beispielsweise ein Verkippen des Ortungsgeräts und/oder Inhomogenitäten einer Wand usw., besonders einfach erfolgen. Besonders vorteilhaft sind die zumindest zwei Sensorelemente jeweils von einem kapazitiven Sensor gebildet.

Vorzugsweise ist die Auswerteeinheit dazu vorgesehen, während einer Datenauswertung eine Störung der Ortungskenngröße mittels der Bewegungskenngröße zu minimieren, wodurch eine effiziente und zumindest teilweise fehlerfreie Ortung von Gegenständen erreicht werden kann. Besonders vorteilhaft weist die Auswerteeinheit hierbei zumindest einen Störungsreduktionsalgorithmus auf. Der Störungsreduktionsalgorithmus und/oder eine Anwendung des Störungsreduktionsalgorithmus kann dabei vorteilhaft von der Auswerteeinheit mittels der erfassten Bewegungskenngröße gesteuert werden, wie beispielsweise bei einer Medianbildung, die von einem Verfahren des Ortungsgeräts abhängig ist und bevorzugt nur bei einem Verfahren des Ortungsgeräts durchgeführt werden soll und bei einem Stillstand des Ortungsgeräts unterbleiben soll. Des Weiteren ist es auch denkbar, dass die Medianbildung zudem abhängig von einer Geschwindigkeit des Ortungsgeräts während eines Verfahrens ausgeführt werden kann, wobei eine starke Mittelung von gemessenen Daten und/oder Kenngrößen bei einem Verfahren des Ortungsgeräts mit einer hohen Bewegungsgeschwindigkeit und eine schwache Mittelung der gemessenen Daten und/oder Kenngrößen bei einem Verfahren des Ortungsgeräts mit einer kleinen Bewegungsgeschwindigkeit erfolgen kann.

In einer weiteren Ausgestaltung der Erfindung wird ein Verfahren, insbesondere mit einem Ortungsgerät, vorgeschlagen, wobei eine Bewegungskenngröße entlang zumindest einer Bewegungsrichtung und eine Ortungskenngröße erfasst werden, die zusammen ausgewertet werden. Es können Daten der Ortungseinheit vorteilhaft ortsaufgelöst bearbeitet werden und ein leistungsfähiges Ortungsgerät mit einer hohen Anwenderfreundlichkeit bzw. einem hohen Bedienkomfort für einen Bediener des Ortungsgeräts vorteilhaft erreicht werden. Es kann zudem eine besonders schnelle und aufeinander abgestimmte Datenauswertung der unterschiedlichen Kenngrößen erfolgen und damit einhergehend eine schnelle Erfassung einer inneren Struktur des Untersuchungsobjekts, wie beispielsweise einer Wand. Insbesondere kann eine vorteilhafte Unterscheidung von unerwünschten Störsignalen, die beispielsweise durch ein Verkippen des Ortungsgeräts und/oder Wandinhomogenitäten hervorgerufen werden können, und einem von einem Gegenstand innerhalb des Untersuchungsobjekts resultierenden Messsignal in der Auswerteeinheit erreicht werden. Die Bewegungskenngröße kann zudem auch in eine Datenauswertung direkt einfließen, indem beispielsweise ein Signal-Rauschabstand, insbesondere mittels einer Medianbildung und/oder eine Mittelwertbildung von Messdaten über einen Weg und/oder Ort, verbessert werden kann. Vorzugsweise ist die Medianbildung an eine Bewegung und/oder ein Verfahren des Ortungsgeräts gebunden, so dass im weiteren Messvorgang bei einem Unterbleiben eines Bewegens und/oder eines Verfahrens des Ortungsgeräts zudem eine Medianbildung unterbleibt, um so eine fehlerhafte Gewichtung von Daten, wie beispielsweise an einem Ortsindex, vorteilhaft zu vermeiden.

Es wird weiterhin vorgeschlagen, dass eine Ortungseinheit zumindest teilweise selbsttätig kalibriert wird. Es kann hierbei eine Kalibrierung, insbesondere eine zeitaufwendige Kalibrierung, der Ortungseinheit bzw. des Ortungsgeräts durch den Bediener vorteilhaft entfallen. Zudem kann eine Fehlkalibrierung, wie beispielsweise bei einem Aufsetzen eines herkömmlichen Ortungsgeräts auf einer Oberfläche einer Wand mit insbesondere einer inhomogenen Struktur, vorteilhaft verhindert und damit einhergehende Fehlmessungen zumindest reduziert werden. Ferner kann insbesondere bei einem Metallortungsgerät eine Fehlkalibrierung vorteilhaft vermieden werden, indem das Metallortungsgerät von einem Bediener in einfacher Weise in die Luft gehalten wird und damit eine Abwesenheit von jeglichem Metall während eines Kalibrierungsvorgangs der Ortungseinheit gewährleistet ist. Besonders vorteilhaft ist die Auswerteeinheit zu einem automatischen Kalibrieren der Ortungseinheit zu Beginn eines Messvorgangs vorgesehen.

Des Weiteren wird vorgeschlagen, dass ein dynamischer Schwellenwert für eine Messung abhängig von der Ortungskenngröße und/oder der Bewegungskenngröße eingestellt wird. Vorzugsweise erfolgt die Einstellung des dynamischen Schwellenwerts selbsttätig durch die Auswerteeinheit während eines Messvorgangs. Es kann durch diese Ausgestaltung der Erfindung eine Erfassung bzw. eine Messung von Gegenständen innerhalb des Untersuchungsobjekts vereinfacht werden und eine unerwünschte Fehlinterpretation der Ortungskenngrößen zumindest reduziert werden.

Zudem wird vorgeschlagen, dass ein Anzeigebereich einer Anzeigeeinheit zumindest teilweise selbsttätig an eine Messamplitude angepasst wird. Es kann hierbei eine detailgetreue Darstellung der unterschiedlichen Messsignale erreicht werden und ein manuelles Umschalten des Anzeigebereichs kann vorteilhaft vermieden werden. Zudem kann eine für einen Bediener vorteilhafte Ausgabe eines Ortungsvorgangs erreicht werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ortungsgerät mit einer Ortungseinheit in einer schematischen Ansicht,
- Fig. 2: das Ortungsgerät zusammen mit einem Untersuchungsobjekt in einer schematischen Ansicht,
- Fig. 3: ein schematisches Schaltbild des Ortungsgeräts,
- Fig. 4: einen Verfahrensablauf einer Ortungsmessung,
- Fig. 5: eine Darstellung eines Signalverlaufs von Bewegungskenngrößen entlang drei Bewegungsrichtungen abhängig von einer Zeit t,
- Fig. 6: eine Darstellung eines Signalverlaufs einer Ortungskenngröße abhängig von einer Bewegungsrichtung,
- Fig. 7: eine Darstellung eines Signalverlaufs von Ortungskenngrößen dreier Sensorelemente abhängig von einer Bewegungsrichtung und
- Fig. 8: eine Darstellung eines differenzierten Gegenstandssignals.

### Beschreibung des Ausführungsbeispiels

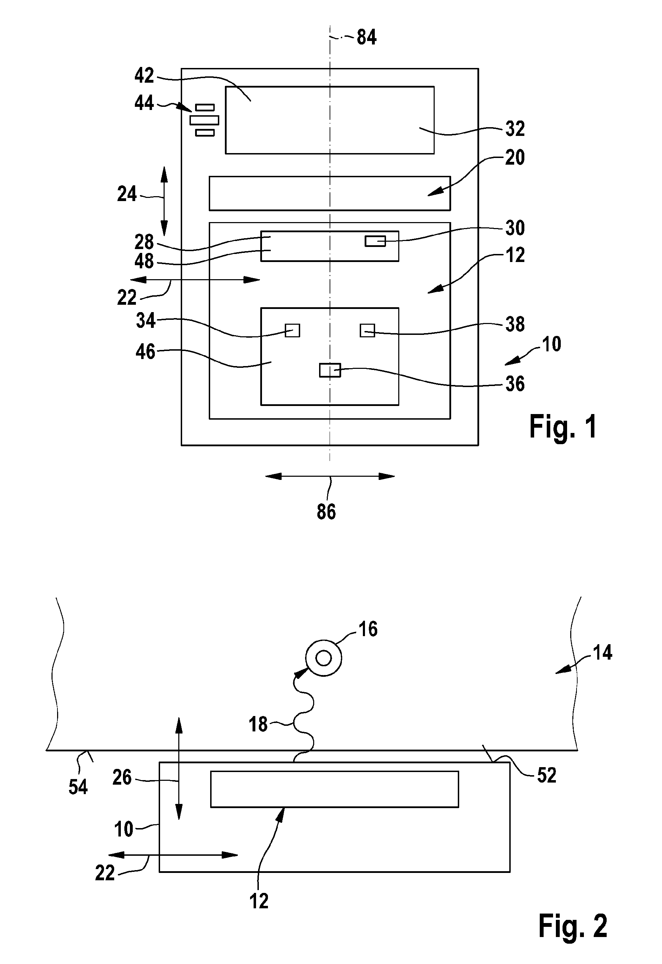

In den Figuren 1 und 2 ist ein handgeführtes Ortungsgerät 10 schematisch dargestellt. Das Ortungsgerät 10 weist eine Ortungseinheit 12 auf, die zu einer Erfassung eines Vorhandenseins eines in einem Untersuchungsobjekt 14, wie beispielsweise einer Wand, angeordneten Gegenstands 16 mittels eines Untersuchungssignals 18 vorgesehen ist. Zudem weist das Ortungsgerät 10 eine Auswerteeinheit 28 auf, die zu einem Auswerten eines gemessenen Signals vorgesehen ist. Des Weiteren weist das Ortungsgerät 10 eine Bewegungssensoreinheit 20 auf, die zu einer Erfassung einer Bewegungskenngröße BKᵢ entlang zumindest einer Bewegungsrichtung 22, 24, 26 im Betrieb des Ortungsgeräts 10 vorgesehen ist, und eine Anzeigeeinheit 32 auf, die zu einer optischen Ausgabe eines Messergebnisses an einen Bediener des Ortungsgeräts 10 während eines Messvorgangs bzw. eines Messbetriebs des Ortungsgeräts 10 vorgesehen ist. Die Anzeigeeinheit 32 weist hierzu ein von einem Display gebildetes Anzeigemittel 42 auf. Alternativ kann die Anzeigeeinheit 32 weitere Anzeigemittel, wie beispielsweise eine Leuchtdiode und/oder weitere, dem Fachmann als sinnvoll erscheinende Anzeigemittel 42 umfassen. Zudem weist das Ortungsgerät 10 eine akustische Ausgabeeinheit 44 auf, die zu einer akustischen Ausgabe von Informationen an den Bediener vorgesehen ist.

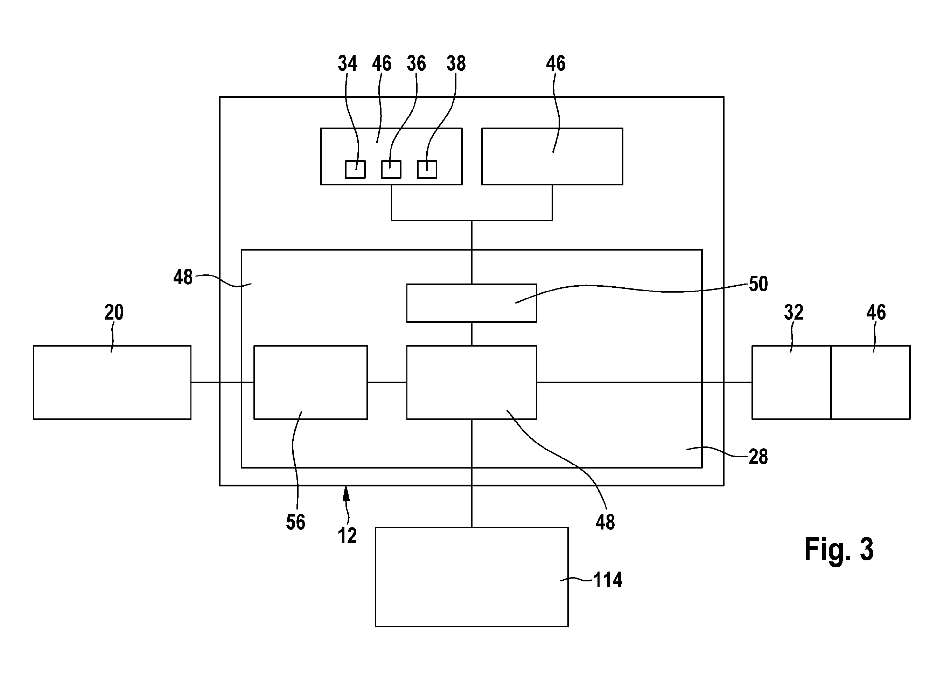

In Figur 3 ist ein schematisches Schaltbild des Ortungsgeräts 10 näher dargestellt. Die Ortungseinheit 12 weist zumindest eine Sensoreinheit 46 oder mehrere Sensoreinheiten 46 auf, die von einer Induktivsensoreinheit und/oder einer Kapazitivsensoreinheit und/oder einer 50/60Hz-Sensoreinheit und/oder einer Radarsensoreinheit und/oder einer Infrarotsensoreinheit und/oder weiteren, dem Fachmann als sinnvoll erscheinenden Sensoreinheiten 46 gebildet sein kann bzw. gebildet sein können. Eine nachfolgende Beschreibung der Erfindung beschränkt sich jedoch im Wesentlichen auf eine Ausbildung der Sensoreinheit 46 als eine Kapazitivsensoreinheit, wobei eine Funktionsweise einer Auswertung von Ortungskenngrößen OKᵢ der Sensoreinheit 46 und Bewegungskenngrößen BKᵢ der Bewegungssensoreinheit 20 bei einer anderweitigen Ausbildung der Sensoreinheit 46 im Wesentlichen gleich bleiben.

Die Sensoreinheit 46 bzw. die Kapazitivsensoreinheit erfasst im Betrieb der Ortungseinheit 12 Ortungskenngrößen OKᵢ, die über eine nicht näher dargestellte Datenleitung an die Auswerteeinheit 28 geleitet werden. Die Kapazitivsensoreinheit erfasst im Betrieb des Ortungsgeräts 10 Ortungskenngrößen OKᵢ, die von Dielektrizitätskenngrößen gebildet sind, wobei mittels den Dielektrizitätskenngrößen eine Information bzw. eine dielektrische Eigenschaft des Untersuchungsobjekts 14 bzw. des darin angeordneten Gegenstands 16 erfasst wird. Die Auswerteeinheit 28 weist einen Mikrokontroller 48 auf, der für eine Auswertung der Ortungskenngröße OKᵢ vorgesehen ist. Für eine Umwandlung der Ortungskenngrößen OKᵢ, die insbesondere von analogen Daten und/oder Kenngrößen gebildet sind, in digitale Daten weist die Auswerteeinheit 28 einen Analog-Digital-Wandler 50 auf. Des Weiteren ist die Auswerteeinheit 28 zu einer Übertragung der Bewegungskenngrößen BKᵢ mit der Bewegungssensoreinheit 20 über die nicht näher dargestellte Datenleitung verbunden. Die Bewegungssensoreinheit 20 erfasst in diesem Ausführungsbeispiel Bewegungskenngrößen BKᵢ entlang von drei Bewegungsrichtungen 22, 24, 26, wobei die einzelnen Bewegungsrichtungen 22, 24, 26 im Wesentlichen orthogonal zueinander ausgerichtet sind. Prinzipiell ist es jedoch denkbar, dass die Bewegungssensoreinheit 20 in einer alternativen Ausgestaltung der Erfindung lediglich eine Bewegungskenngröße BK₁ entlang nur einer Bewegungsrichtung 22, 24, 26 oder zwei Bewegungsrichtungen 22, 24, 26 erfasst. Zwei der drei Bewegungsrichtungen 22, 24, 26 spannen eine Fläche auf, die parallel zu einer Gehäuseoberfläche 52 des Ortungsgeräts 10 ist, die in einem bestimmungsgemäßen Betrieb des Ortungsgeräts 10 parallel zu einer Wandoberfläche 54 des Untersuchungsobjekts 14 angeordnet ist (Figur 2).

Die Bewegungssensoreinheit 20 kann einen Beschleunigungssensor umfassen, wie beispielsweise einen MEMS-Sensor, welcher eine Beschleunigung in einer von einer Spannungskenngröße gebildeten Bewegungskenngröße BKᵢ ausgibt. Eine Geschwindigkeit kann durch eine Integration der Bewegungskenngröße BKᵢ über eine Zeit t ermittelt werden bzw. eine zurückgelegte Wegstrecke kann durch eine zweifache Integration der Bewegungskenngröße BKᵢ ermittelt werden. Des Weiteren kann die Bewegungssensoreinheit 20 einen optischen Sensor zur Erfassung der Bewegungskenngröße BKᵢ umfassen. Der optische Bewegungssensor kann hierbei analog zu einer optischen Computermaus aufgebaut sein, welcher über Bildaufnahmeelemente verfügt und welcher durch eine Beleuchtung einer Messoberfläche, beispielsweise mittels einer LED und/oder eines Lasers usw., reflektierte Helligkeitsunterschiede auswertet und eine Richtung und/oder Geschwindigkeit ermittelt. Zudem kann die Bewegungssensoreinheit 20 einen mechanischen Sensor umfassen, welcher analog zu einer Kugel-Computermaus aufgebaut sein kann. Alternativ kann der mechanische Sensor ferner von einem Vibrations-/Neigungssensor mit einer leitfähigen Kugel gebildet sein, wobei der Vibrations-/Neigungssensor eine Lage der Kugel in einem Metallgehäuse der Sensoreinheit über Schließung eines Kontakts erfassen kann. Zudem kann die Bewegungssensoreinheit 20 einen Neigungssensor mit einem Elektrolyten umfassen, bei welchem durch die Schließung eines Kontakts ein Neigungswinkel erfasst wird. Alternativ ist eine Ausbildung der Bewegungssensoreinheit 20 mit allen, dem Fachmann als sinnvoll erscheinenden Sensoren möglich. Des Weiteren kann die Bewegungssensoreinheit 20 mit einer Signalvorverarbeitung ausgestattet sein, die insbesondere eine Drift- bzw. eine Temperaturkorrektur beinhalten kann.

Die Daten bzw. die Bewegungskenngrößen BKᵢ der Bewegungssensoreinheit 20 werden im Betrieb des Ortungsgeräts 10 an eine Erfassungseinheit 56 der Auswerteeinheit 28 gegeben, wobei in der Erfassungseinheit 56 eine erste Signalverarbeitung erfolgt. In der Auswerteeinheit 28 werden die Kenngrößen der Sensoreinheit 46 und der Bewegungssensoreinheit 20 zusammen ausgewertet. Eine Ausgabe von Messergebnissen erfolgt über die Anzeigeeinheit 32 und/oder die akustische Ausgabeeinheit 44 (Figur 3). Des Weiteren weist das Ortungsgerät 10 eine Eingabeeinheit 114 auf, über die der Bediener des Ortungsgeräts 10 eine Wahl eines Messmodus und/oder weitere, dem Fachmann als sinnvoll erscheinende Steuerdaten eingeben kann. Die Eingabeeinheit 114 kann hierbei zumindest teilweise von einer Tastatur gebildet sein.

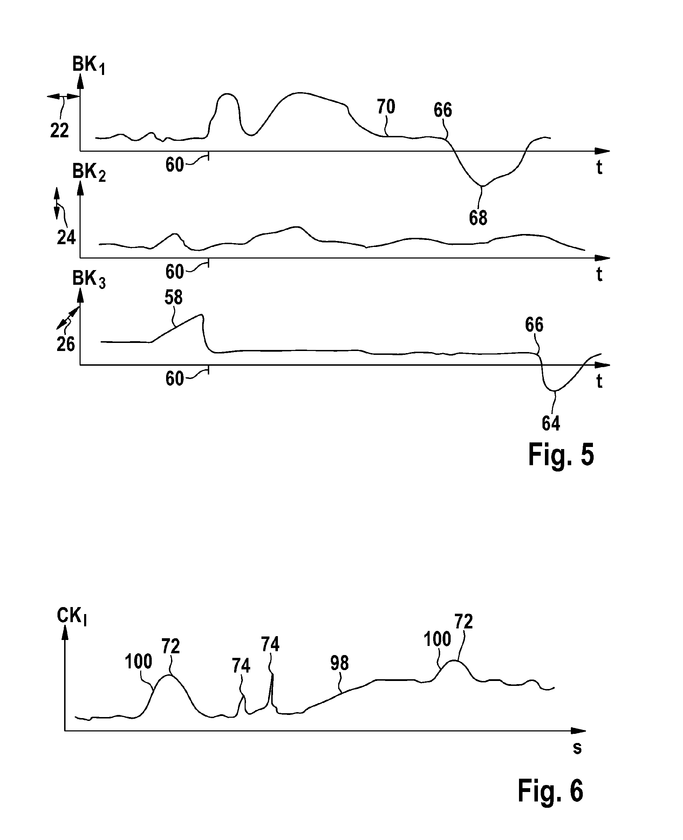

In Figur 5 sind die von der Bewegungssensoreinheit 20 sensierten Bewegungskenngrößen BKᵢ über eine Zeit t dargestellt. Die drei Bewegungskenngrößen BK₁, BK₂, BK₃ kennzeichnen jeweils eine Bewegung entlang einer Bewegungsrichtung 22, 24, 26, wobei die einzelnen Bewegungsrichtungen 22, 24, 26 orthogonal zueinander ausgerichtet sind (Figuren 1 und 2). Die erste und die zweite Bewegungsrichtung 22, 24 spannen hierbei im Wesentlichen die Fläche auf, die im Wesentlichen parallel zur Gehäuseoberfläche 52 ausgerichtet ist, wobei die Gehäuseoberfläche 52 in einem korrekten Messbetrieb von einer dem Untersuchungsobjekt 14 zugewandten Oberfläche des Ortungsgeräts 10 gebildet ist, die im Wesentlichen parallel zur Oberfläche des Untersuchungsobjekts 14 ist. Die dritte Bewegungsrichtung 26 ist im Wesentlichen senkrecht zu der ersten und der zweiten Bewegungsrichtung 22, 24 ausgerichtet. Nach einem Einschalten des Ortungsgeräts 10 wird dieses im Wesentlichen entlang der dritten Bewegungsrichtung 26 auf das Untersuchungsobjekt 14 zubewegt, was sich durch einen steilen Anstieg 58 in der Bewegungskenngröße BK₃ entlang der dritten Bewegungsrichtung 26 bemerkbar macht. Nach einem Aufsetzen 60 des Ortungsgeräts 10 auf der Wandoberfläche 54 erfährt das Ortungsgerät 10 im Wesentlichen eine Bewegung zu der Wandoberfläche 54, so dass die Bewegungskenngröße BK₃ entlang der dritten Bewegungsrichtung 26 nahezu konstant bleibt und erst bei einem Abheben 62 des Ortungsgeräts 10 eine Signaländerung anzeigt, wobei die Bewegungskenngröße BK₃ der dritten Bewegungsrichtung 26 hier einen negativen Signalwert 64 bildet. In dem Signalverlauf der Bewegungskenngrößen BK₁, BK₂ der ersten und der zweiten Bewegungsrichtung 22, 24 kann im Betrieb der Bewegungssensoreinheit 20 eine Bewegung des Ortungsgeräts 10 parallel zu der Wandoberfläche 54 erfasst werden. Das Ortungsgerät 10 kann hierbei direkt auf der Wandoberfläche 54 von einem Bediener bewegt bzw. verfahren werden oder mit einem Abstand parallel zu der Wandoberfläche 54, wobei das Ortungsgerät 10 hierzu nicht näher dargestellte Gleitelemente, die von Filzgleitern gebildet sein können, aufweist, die einen exakten Abstand des Ortungsgeräts 10 zu der Wandoberfläche 54 bei einem Bewegen bzw. Verfahren des Ortungsgeräts 10 ermöglichen. Je nach einer Verfahrbewegung des Ortungsgeräts 10 zeigt sich ein unterschiedlicher Signalverlauf in den beiden Bewegungskenngrößen BK₁, BK₂. Zudem kann eine Richtungsumkehr 66 durch einen negativen Signalwert 68 in einer der beiden Bewegungskenngrößen BK₁, BK₂ entlang einer der beiden Bewegungsrichtungen 22, 24 erfasst werden. Ein Bewegungsstopp 70 des Ortungsgeräts 10 ist durch einen Signalabfall auf einen Grundpegel in den Bewegungskenngrößen BK₁, BK₂, BK₃ erkennbar.

In Figur 6 ist ein Signalverlauf einer Ortungskenngröße OKᵢ eines Sensorelements 34, 36, 38 der Ortungseinheit 12 über eine Strecke s dargestellt. Ein Gegenstand 16 wird durch einen Signalausschlag 72 in den Ortungskenngrößen OKᵢ erfasst. Die Sensorelemente 34, 36, 38 erfassen einen in dem Untersuchungsobjekt 14 angeordneten Gegenstand 16 bereits mit einem Abstand von ca. 4 cm entlang der Bewegungsrichtung 22. Dies macht sich zunächst durch einen langsamen Signalanstieg zu Beginn des Signalausschlags 72 und einen parabelförmigen Verlauf des Signalausschlags 72 bemerkbar. Des Weiteren sind in dem Signalverlauf der Ortungskenngröße OKᵢ weitere Signalausschläge zu erkennen, die von Störsignalen 74 gebildet sind.

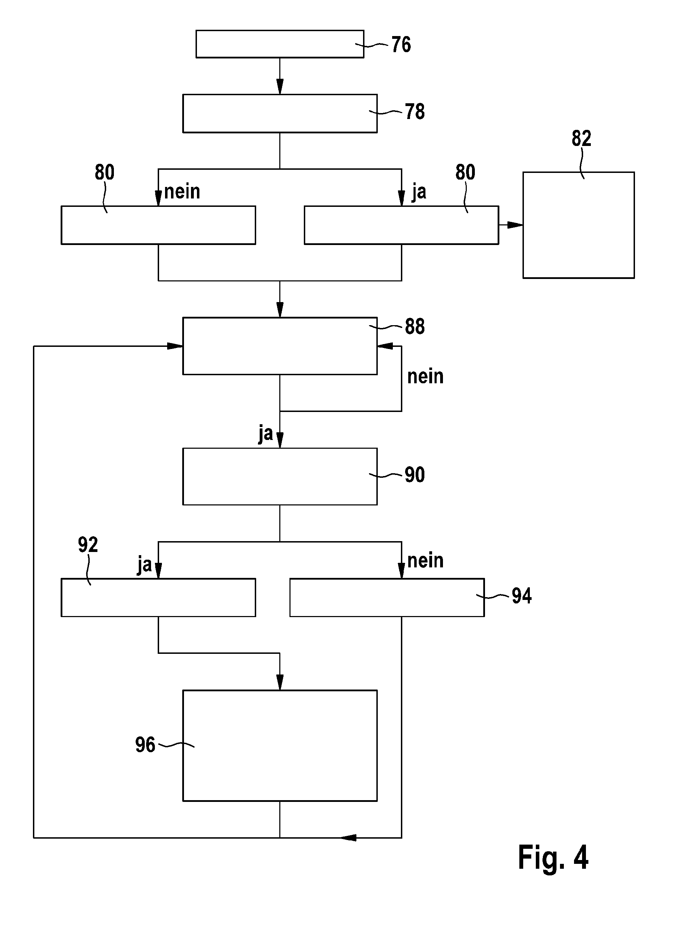

In Figur 4 ist ein schematischer Ablauf eines Messvorgangs des Ortungsgeräts 10 näher dargestellt. Nach einem Einschalten und/oder einem Aktivieren des Ortungsgeräts 10 wird von der Auswerteeinheit 28 ein möglicher Wandkontakt 76 des Ortungsgeräts 10 mit der zu untersuchenden Wand erfasst (Figur 4). Der Wandkontakt 76 wird im Wesentlichen durch Erfassung einer Bewegung, die senkrecht zur Wandoberfläche 54 entlang der dritten Bewegungsrichtung 26 erfolgt, bestimmt. Anschließend wird mittels der Bewegungssensoreinheit 20 eine Bewegung 78 des Ortungsgeräts 10 auf bzw. parallel zur Wandoberfläche 54 in Form von zwei Bewegungskenngrößen BK₁, BK₂ erfasst und die Ortungseinheit 12 selbsttätig von der Auswerteeinheit 28 kalibriert. Zur Kalibrierung 80 werden von der Auswerteeinheit 28 die Bewegungskenngrößen BKᵢ zusammen mit den Ortungskenngrößen OKᵢ ausgewertet, die von der Sensoreinheit 46 erfasst werden. Die Sensoreinheit 46 weist mehrere Sensorelemente 34, 36, 38 auf, die jeweils eine Ortungskenngröße OKᵢ erfassen. Die Kalibrierung 80 der Ortungseinheit 12 kann sowohl bei einem Bewegen des Ortungsgeräts 10 über die Wandoberfläche 54 bzw. entlang einer Richtung, die parallel zur Wandoberfläche 54 ist, als auch bei einem Nichtbewegen des Ortungsgeräts 10 erfolgen. Bei mehr als zwei von Kapazitivsensorelementen gebildeten Sensorelementen 34, 36, 38 der Sensoreinheit 46 können von der Auswerteeinheit 28 diejenigen Sensorelemente 34, 36, 38 für die Kalibrierung 80 ausgewählt werden, die eine entlang einer Richtung einer Bewegung des Ortungsgeräts 10 maximale Empfindlichkeit aufweisen. Zudem kann zur Kalibrierung 80 das Ortungsgerät 10 von dem Bediener in die Luft gehalten werden, so dass die Sensorelemente 34, 36, 38 der Sensoreinheit 46 von eventuellen Störungen, insbesondere von Metallgegenständen, die in dem Messobjekt angeordnet sein können, unbeeinflusst bleiben.

Sofern eine Kalibrierung 80 bei einem Bewegen 78 bzw. einem Verfahren des Ortungsgeräts 10 entlang der Richtung parallel zur Wandoberfläche 54 erfolgt, kann gegebenenfalls automatisch von der Auswerteeinheit 28 eine Anpassung 82 einer Empfindlichkeit bzw. eine Einstellung eines dynamischen Schwellenwerts der einzelnen Sensorelemente 34, 36, 38 erfolgen. Die Empfindlichkeit des dynamischen Schwellenwerts ist hierbei abhängig von einer Signaländerung der sensierten Signale bzw. Ortungskenngrößen OKᵢ über den zurückgelegten Weg des Ortungsgeräts 10 bzw. von einer Beschaffenheit des Untersuchungsobjekts 14 entlang des zurückgelegten Wegs des Ortungsgeräts 10. Beispielsweise können Inhomogenitäten in einer Oberflächenschicht des Untersuchungsobjekts 14 hierbei große Untergrundsignale erzeugen, die durch eine Anpassung 82 der Empfindlichkeit zumindest teilweise unterdrückt werden können. Eine Anpassung 82 der Empfindlichkeit bzw. der dynamischen Schwellenwerte der einzelnen Sensorelemente 34, 36, 38 wird von der Auswerteeinheit 28 ständig an aktuelle Ortungskenngrößen OKᵢ angepasst. Die Empfindlichkeit bzw. die dynamischen Schwellenwerte werden von der Auswerteeinheit 28 derart gewählt, dass eine Anzeige von Störsignalen in der Anzeigeeinheit 32 unterbleibt. Störsignale können hierbei neben Inhomogenitäten auch von Oberflächeneffekten des Untersuchungsobjekts 14 hervorgerufen werden, die das Sensorsignal stärker beeinflussen können als ein Gegenstand 16. Die Empfindlichkeit der einzelnen Sensorelemente 34, 36, 38 kann von der Auswerteeinheit 28 soweit herabgesetzt werde und die dynamischen Schwellenwerte soweit heraufgesetzt werden, dass diese Störeffekte unterhalb eines Empfindlichkeitsbereichs angeordnet sind.

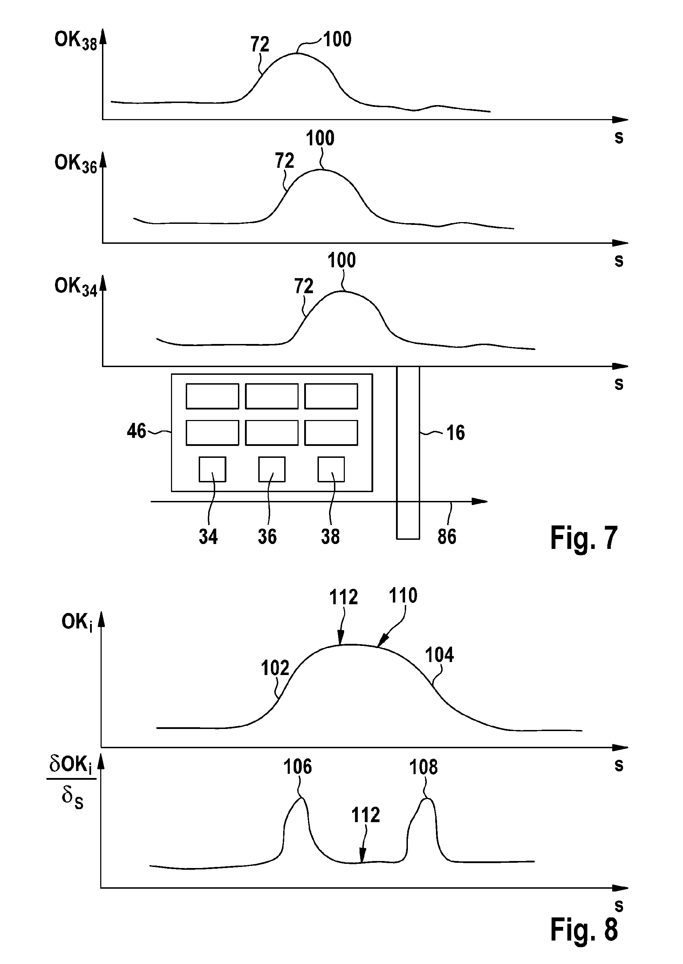

Anschließend werden die Ortungskenngrößen OKᵢ der einzelnen Sensorelemente 34, 36, 38 der Sensoreinheit 46 ortsabhängig ausgewertet. Die Sensorelemente 34, 36, 38 sind räumlich verteilt innerhalb der Sensoreinheit 46 angeordnet (Figur 7). Bei einem Bewegen des Ortungsgeräts 10 entlang einer bevorzugten Richtung bzw. einer bevorzugten Verfahrrichtung 86 des Ortungsgeräts 10 parallel zu der Wandoberfläche 54 überdecken die einzelnen Sensorelemente 34, 36, 38 nacheinander dieselben Teilbereiche des Untersuchungsobjekts 14 bzw. des Gegenstands 16. Die bevorzugte Verfahrrichtung 86 des Ortungsgeräts 10 ist hierbei im Wesentlichen senkrecht zu einer Längsachse 84 des Ortungsgeräts 10 ausgerichtet. Zur Datenauswertung wird von der Auswerteeinheit 28 die Verfahrrichtung 86 des Ortungsgeräts 10 aus den Bewegungskenngrößen BKᵢ der Bewegungssensoreinheit 20 ermittelt und anschließend die einzelnen Sensorelemente 34, 36, 38 der Sensoreinheit 46 hinsichtlich einer Änderung 88 der Ortungskenngröße OKᵢ analysiert. In den Daten des Sensorelements 38, das entlang der Verfahrrichtung 86 Teilbereiche des Untersuchungsobjekts 14 bzw. des Gegenstands 16 zuerst überfährt bzw. überdeckt, wird von der Auswerteeinheit 28 zuerst nach einer Änderung der Ortungskenngröße OK₃₈ gesucht, die ein Hinweis auf eine Inhomogenität und/oder einen gesuchten Gegenstand 16 innerhalb des Untersuchungsobjekts 14 sein kann. Sobald eine Änderung der Ortungskenngröße OK₃₈ vorliegt, werden auch bei einem weiteren Verfahren des Ortungsgeräts 10 die restlichen Sensorelemente 36, 34 hinsichtlich einer Änderung 90 der Ortungskenngröße OK₃₆, OK₃₄, die im Wesentlichen der Änderung 88 der Ortungskenngröße OK₃₈ des ersten Sensorelements 38 entspricht, ausgewertet. Sofern in den restlichen Sensorelementen 34, 36 ein im Wesentlichen identischer Signalverlauf angezeigt wird, der entlang der Verfahrrichtung 86 nacheinander in den einzelnen Sensorelementen 34, 36, 38 sensiert werden muss, werden diese von der Auswerteeinheit 28 als ein in dem Untersuchungsobjekt 14 angeordneter Gegenstand 16 identifiziert. Dies ist in Figur 7, einer Darstellung der Ortungskenngrößen OK₁ der einzelnen Sensorelemente 34, 36, 38 über die Strecke s, gezeigt. Eine Signalausgabe 92 der Messergebnisse für den Bediener erfolgt in der Anzeigeeinheit 32. Sofern keine Übereinstimmung in den Ortungskenngrößen OK₃₈, OK₃₆, OK₃₄ gefunden wird, wird dies als eine Störung von der Auswerteeinheit 28 identifiziert und es erfolgt keine Ausgabe 94 der Ergebnisse. Zudem erfolgt eine Speicherung 96 der Daten der Sensoreinheit 46 und der Bewegungssensoreinheit 20 von der Auswerteeinheit 28 in einem Speichermittel 30 der Auswerteeinheit 28, so dass bei einem Richtungswechsel des Ortungsgeräts 10 bzw. einem erneuten Überfahren des Teilbereichs des Untersuchungsobjekts 14 durch das Ortungsgerät 10 diese Messwerte für eine Datenanalyse zur Verfügung stehen. Bei einem weiteren Verfahren bzw. Bewegen des Ortungsgeräts 10 wiederholt sich der Messvorgang entsprechend den oben beschriebenen Ausführungen.

Zudem können mittels der Bewegungskenngrößen BKᵢ der Bewegungssensoreinheit 20 in den einzelnen sensierten Sensorsignalen der Sensorelemente 34, 36, 38 Störsignale bzw. Untergrundsignale von der Auswerteeinheit 28 herausgefiltert werden. Zur einer eindeutigen Identifizierung eines Gegenstands 16, wie beispielsweise einem Balken, einer Leitung, einem Rohr usw., müssen Signaländerungen der Ortungskenngrößen OKᵢ in allen Sensorelementen 34, 36, 38 erkennbar sein und zudem an einer im Wesentlichen gleichen Position innerhalb des Untersuchungsobjekts 14 sensiert werden. Sofern sich die Signaländerungen in den einzelnen Sensorelementen 34, 36, 38 unterscheiden, kann in der Auswerteeinheit 28 auf eine unerwünschte Störung geschlossen werden, wie beispielsweise ein Verkippen des Ortungsgeräts 10 und/oder ein unerwünschtes Abheben des Ortungsgeräts 10 (Figur 6). Des Weiteren kann über die Auswerteeinheit 28 eine Mustersuche zur Identifizierung von Gegenständen 16 erfolgen, indem Gegenstände 16 nach einem konkreten Muster in den Ortungskenngrößen OKᵢ, wie beispielsweise einem parabelförmigen Verlauf der Ortungskenngröße OKᵢ usw., von Untergrundsignalen und/oder Störsignalen unterschieden werden. Hierbei bleibt ein fester Schwellenwert für eine Gegenstandsanzeige von der Auswerteeinheit 28 unberücksichtigt, da Gegenstände 16 lediglich nach dem Signalmuster ausgewählt werden.

Die Auswerteeinheit 28 kann hierbei aus den Bewegungskenngrößen BKᵢ eine zurückgelegte Wegstrecke und/oder einen Richtungswechsel und/oder eine Geschwindigkeit des Ortungsgeräts 10 ermitteln und anhand dieser die der einzelnen Sensorelemente 34, 36, 38 auswerten bzw. interpretieren (Figuren 5 und 6). Es kann hierbei von der Auswerteeinheit 28 zudem ein Driftsignal 98 von Gegenstandssignalen 100 in den Ortungskenngrößen OKᵢ unterschieden werden und/oder eine Überlagerung eines Driftsignals 98 und dem Gegenstandssignal 100 erkannt werden und eine Signalverarbeitung an eine jeweilige Situation angepasst werden. Das Driftsignal 98 kann von Temperaturschwankungen, insbesondere Temperaturerhöhungen, in der Sensoreinheit 46 verursacht werden, wobei hierbei eine Signaländerung bzw. eine Änderung der Ortungskenngrößen OKᵢ selbst bei einem Bewegungsstillstand des Ortungsgeräts 10 erfolgen kann. Zudem ist es auch möglich, ein Signalmaximum in den Ortungskenngrößen OKᵢ hinsichtlich der Bewegungsrichtung 22, 24, 26 zu analysieren, so dass eine exakte Lokalisierung eines Gegenstands 16 durch die Auswerteeinheit 28 erfasst wird. Allein aus den Ortungskenngrößen OKᵢ ist es unersichtlich, ob ein Signalabfall in der Ortungskenngröße OKᵢ eines Sensorelements 34, 36, 38 aufgrund einer kompletten Überdeckung des Gegenstands 16 mit anschließendem Entfernen von dem Gegenstand 16 erfolgt oder aufgrund einer Richtungsumkehr 66 des Ortungsgeräts 10. Mittels der Bewegungskenngröße BKᵢ kann diese Informationslücke gefüllt werden und es kann eine eindeutige Lokalisierung des Gegenstands 16 in der Auswerteeinheit 28 erreicht werden. Die Auswerteeinheit 28 kann des Weiteren die Bewegungskenngrößen BKᵢ und die Ortungskenngrößen OKᵢ für einen erfassten Gegenstand 16 in dem Speichermittel 30 abspeichern. Bei einem erneuten Überfahren des Gegenstands 16 kann hierbei ein Anzeigebereich der Anzeigeeinheit 32 auf eine maximale Amplitude der Ortungskenngrößen OKᵢ automatisch von der Auswerteeinheit 28 anhand der gespeicherten Ortungskenngrößen OKᵢ und/oder Bewegungskenngrößen BKᵢ eingestellt werden, so dass eine maximale Auflösung der Anzeigeeinheit 32 für den Bediener zur Darstellung des sensierten Gegenstands 16 genutzt wird und eine manuelle Bereichsumschaltung durch den Bediener entfällt.

Im Betrieb des Ortungsgeräts 10 kann eine Anzahl bzw. eine Häufigkeit an Messwertmittelungen dynamisch an die Bewegungsgeschwindigkeit des Ortungsgeräts 10 von der Auswerteeinheit 28 angepasst werden. Wird hierbei das Ortungsgerät 10 mit einer hohen Geschwindigkeit über das Untersuchungsobjekt 14 bewegt, wird selten eine Messwertmittelung der Bewegungskenngrößen BKᵢ der einzelnen Sensorelemente 34, 36, 38 von der Auswerteeinheit 28 durchgeführt, so dass daraus eine geringe Empfindlichkeit der Ortungseinheit 12 und eine grobe Abschätzung über in dem Untersuchungsobjekt 14 angeordneten Gegenständen 16 resultiert. Wird das Ortungsgerät 10 dagegen mit einer langsamen Geschwindigkeit über das Untersuchungsobjekt 14 bewegt, erfolgt eine häufige Messwertmittelung mittels der Auswerteeinheit 28, so dass ein Signal-Rausch-verhältnis verbessert wird und die Empfindlichkeit der Ortungseinheit 12 erhöht wird. Gegenstände 16 in dem Untersuchungsobjekt 14 können hierbei präzise erkannt und lokalisiert werden. Eine Ausgabe der Messergebnisse erfolgt in der Anzeigeeinheit 32 bzw. in der akustischen Ausgabeeinheit 44 durch Ausgabe eines Signaltons. Zudem ist die Messwertmittelung abhängig von einem Verfahren des Ortungsgeräts 10 und erfolgt nur bei einem Verfahren des Ortungsgeräts 10, so dass bei einem Stillstand des Ortungsgeräts 10 eine Messwertmittelung unterbleibt. Die Messwertmittelung erfolgt über Störungsreduktionsalgorithmen der Auswerteeinheit 28, wobei eine Anwendung der Störungsreduktionsalgorithmen abhängig von den Bewegungskenngrößen BKᵢ, wie beispielsweise abhängig von einer Geschwindigkeit eines Verfahrens des Ortungsgeräts 10 und/oder einer Unterscheidung zwischen einem Verfahren und einem Stillstand des Ortungsgeräts 10, gesteuert wird.

Zu einer vereinfachten Erkennung eines detektierten Gegenstands 16 für den Bediener des Ortungsgeräts 10 ist die Auswerteeinheit 28 während der Signalverarbeitung zudem dazu vorgesehen, die Ortungskenngröße OKᵢ bzw. einen Signalverlauf der Ortungskenngröße OKᵢ nach der Strecke s zu differenzieren (Figur 8). Es treten vor allem Kanten bzw. Randbereiche des Gegenstands 16 aufgrund eines steilen Signalanstiegs 102 bzw. Signalabfalls 104 deutlich in den differenzierten Ortungskenngrößen OKᵢ hervor, die einen Anfang 106 und ein Ende 108 des Gegenstands 16 entlang der Verfahrrichtung 86 des Ortungsgeräts 10 für den Bediener anzeigen. Aufgrund eines nahezu flachen Signalverlaufs 110 in einer Mitte 112 des Gegenstands 16 entlang der Verfahrrichtung 86 des Ortungsgeräts 10 tritt die Mitte 112 bei dieser gewählten Form der Anzeige kaum in Erscheinung.

## Patentansprüche

1. Ortungsgerät, insbesondere handgeführtes Ortungsgerät, mit einer Ortungseinheit (12), die zu einer Erfassung eines Vorhandenseins eines in einem Untersuchungsobjekt (14) angeordneten Gegenstands (16) mittels eines Untersuchungssignals (18) vorgesehen ist, mit einer Bewegungssensoreinheit (20), die dazu vorgesehen ist, wenigstens eine Bewegungskenngröße (BKᵢ) entlang zumindest einer Bewegungsrichtung (22, 24, 26) zu erfassen, sowie mit einer Auswerteeinheit (28), die dazu vorgesehen ist, die Bewegungskenngröße (BKᵢ) und zumindest eine Ortungskenngröße (OKᵢ) der Ortungseinheit (12) miteinander auszuwerten, **dadurch gekennzeichnet, dass** die Auswerteeinheit (28) dazu vorgesehen ist, einen dynamischen Schwellenwert für eine Messung abhängig von der Ortungskenngröße (OKᵢ) und der Bewegungskenngröße (BKᵢ) einzustellen.

2. Ortungsgerät nach Anspruch 1, **dadurch gekennzeichnet, dass** die Auswerteeinheit (28) dazu vorgesehen ist, mittels der Ortungskenngröße (OKᵢ) und der Bewegungskenngröße (BKᵢ) die Ortungseinheit (12) zumindest teilweise selbsttätig zu kalibrieren.

3. Ortungsgerät nach einem der vorhergehenden Ansprüche, **dadurch gekennzeichnet, dass** die Auswerteeinheit (28) zumindest ein Speichermittel (30) aufweist, das zu einer Speicherung der Ortungskenngröße (OKᵢ) und/oder der Bewegungskenngröße (BKᵢ) vorgesehen ist.

4. Ortungsgerät nach einem der vorhergehenden Ansprüche, **gekennzeichnet durch** eine Anzeigeeinheit (32) mit einem Anzeigebereich, wobei die Auswerteeinheit (28) dazu vorgesehen ist, den Anzeigebereich zumindest teilweise selbsttätig an die Ortungskenngröße (OKᵢ) anzupassen.

5. Ortungsgerät nach einem der vorhergehenden Ansprüche, **dadurch gekennzeichnet, dass** die Bewegungssensoreinheit (20) dazu vorgesehen ist, eine Bewegung entlang zumindest zwei Bewegungsrichtungen (22, 24, 26) zu erfassen.

6. Ortungsgerät nach einem der vorhergehenden Ansprüche, **dadurch gekennzeichnet, dass** die Ortungseinheit (12) zumindest zwei Sensorelemente (34, 36, 38) aufweist.

7. Ortungsgerät nach einem der vorhergehenden Ansprüche, **dadurch gekennzeichnet, dass** die Auswerteeinheit (28) dazu vorgesehen ist, während einer Datenauswertung eine Störung der Ortungskenngröße (OKᵢ) mittels der Bewegungskenngröße (BKᵢ) zu minimieren.

8. Ortungsgerät nach Anspruch 7, **dadurch gekennzeichnet, dass** die Auswerteeinheit (28) zumindest einen Störungsreduktionsalgorithmus aufweist.

9. Verfahren zum Betreiben eines Ortungsgerätes, insbesondere eines Ortungsgerätes (10) nach einem der vorhergehenden Ansprüche, mit einer Ortungseinheit (12), die zu einer Erfassung eines Vorhandenseins eines in einem Untersuchungsobjekt (14) angeordneten Gegenstands (16) mittels eines Untersuchungssignals (18) vorgesehen ist, mit einer Bewegungssensoreinheit (20), die dazu vorgesehen ist, wenigstens eine Bewegungskenngröße (BKᵢ) entlang zumindest einer Bewegungsrichtung (22, 24, 26) zu erfassen, sowie mit einer Auswerteeinheit (28), die dazu vorgesehen ist, die Bewegungskenngröße (BKᵢ) und zumindest eine Ortungskenngröße (OKᵢ) der Ortungseinheit (12) miteinander auszuwerten, **dadurch gekennzeichnet, dass** ein dynamischer Schwellenwert für eine Messung abhängig von der Ortungskenngröße (OKᵢ) und der Bewegungskenngröße (BKᵢ) eingestellt wird.

10. Verfahren nach Anspruch 9, **dadurch gekennzeichnet, dass** die Ortungseinheit (12) zumindest teilweise selbsttätig kalibriert wird.

11. Verfahren zumindest nach Anspruch 9, **dadurch gekennzeichnet, dass** ein Anzeigebereich einer Anzeigeeinheit (32) zumindest teilweise selbsttätig an eine Messamplitude angepasst wird.

## Claims

1. Locating device, in particular hand-held locating device, having a locating unit (12) which is provided to detect the presence of an item (16), arranged in an examination object (14), by means of an examination signal (18), a motion sensor unit (20) which is provided to detect at least one motion parameter (BKᵢ) along at least one direction of motion (22, 24, 26), and also an evaluation unit (28) which is provided to jointly evaluate the motion parameter (BKᵢ) and at least one locating parameter (OKᵢ) of the locating unit (12), **characterized in that** the evaluation unit (28) is provided to set a dynamic threshold value for a measurement as a function of the locating parameter (OKᵢ) and the motion parameter (BKᵢ).

2. Locating device according to Claim 1, **characterized in that** the evaluation unit (28) is provided to at least partially automatically calibrate the locating unit (12) by means of the locating parameter (OKᵢ) and the motion parameter (BKᵢ).

3. Locating device according to either of the preceding claims, **characterized in that** the evaluation unit (28) has at least one storage means (30) which is provided to store the locating parameter (OKᵢ) and/or the motion parameter (BKᵢ).

4. Locating device according to one of the preceding claims, **characterized by** a display unit (32) having a display area, the evaluation unit (28) being provided to adapt the display area at least partially automatically to the locating parameter (OKᵢ).

5. Locating device according to one of the preceding claims, **characterized in that** the motion sensor unit (20) is provided to detect a motion along at least two directions of motion (22, 24, 26).

6. Locating device according to one of the preceding claims, **characterized in that** the locating unit (12) has at least two sensor elements (34, 36, 38).

7. Locating device according to one of the preceding claims, **characterized in that** the evaluation unit (28) is provided to minimize interference in the locating parameter (OKᵢ) during data evaluation by means of the motion parameter (BKᵢ).

8. Locating device according to Claim 7, **characterized in that** the evaluation unit (28) has at least one interference reduction algorithm.

9. Method for operating a locating device, in particular a locating device (10) according to one of the preceding claims, comprising a locating unit (12) which is provided to detect the presence of an item (16), arranged in an examination object (14), by means of an examination signal (18), a motion sensor unit (20) which is provided to detect at least one motion parameter (BKᵢ) along at least one direction of motion (22, 24, 26), and also an evaluation unit (28) which is provided to jointly evaluate the motion parameter (BKᵢ) and at least one locating parameter (OKᵢ) of the locating unit (12), **characterized in that** a dynamic threshold value for a measurement is set as a function of the locating parameter (OKᵢ) and the motion parameter (BKᵢ).

10. Method according to Claim 9, **characterized in that** the locating unit (12) is at least partially automatically calibrated.

11. Method according to Claim 9, **characterized in that** a display area of a display unit (32) is adapted at least partially automatically to a measuring amplitude.

## Revendications

1. Appareil de localisation, notamment appareil de localisation manuel, comprenant une unité de localisation (12) qui est prévue pour une détection d'une présence d'un objet (16) disposé dans un objet examiné (14) au moyen d'un signal d'examen (18), une unité de détection de déplacement (20) qui est prévue pour détecter au moins une grandeur caractéristique de déplacement (BKᵢ) le long d'au moins un sens de déplacement (22, 24, 26), ainsi qu'une unité d'interprétation (28) qui est prévue pour interpréter ensemble la grandeur caractéristique de déplacement (BKᵢ) et au moins une grandeur caractéristique de localisation (OKᵢ) de l'unité de localisation (12), **caractérisé en ce que** l'unité d'interprétation (28) est prévue pour régler une valeur de seuil dynamique pour une mesure en fonction de la grandeur caractéristique de localisation (OKᵢ) et de la grandeur caractéristique de déplacement (BKᵢ).

2. Appareil de localisation selon la revendication 1, **caractérisé en ce que** l'unité d'interprétation (28) est prévue pour calibrer au moins partiellement automatiquement l'unité de localisation (12) au moyen de la grandeur caractéristique de localisation (OKᵢ) et de la grandeur caractéristique de déplacement (BKᵢ).

3. Appareil de localisation selon l'une des revendications précédentes, **caractérisé en ce que** l'unité d'interprétation (28) présente au moins un moyen de mémorisation (30) qui est prévu pour une mise en mémoire de la grandeurs caractéristique de localisation (OKᵢ) et/ou de la grandeur caractéristique de déplacement (BKᵢ).

4. Appareil de localisation selon l'une des revendications précédentes, **caractérisé par** une unité d'affichage (32) munie d'une zone d'affichage, l'unité d'interprétation (28) étant prévue pour adapter la zone d'affichage au moins partiellement automatiquement à la grandeur caractéristique de localisation (OKᵢ).

5. Appareil de localisation selon l'une des revendications précédentes, **caractérisé en ce que** l'unité de détection de déplacement (20) est prévue pour détecter un déplacement le long d'au moins deux sens de déplacement (22, 24, 26).

6. Appareil de localisation selon l'une des revendications précédentes, **caractérisé en ce que** l'unité de localisation (12) présente au moins deux éléments de détection (34, 36, 38).

7. Appareil de localisation selon l'une des revendications précédentes, **caractérisé en ce que** l'unité d'interprétation (28) est prévue pour, pendant une interprétation des données, minimiser une perturbation de la grandeur caractéristique de localisation (OKᵢ) au moyen de la grandeur caractéristique de déplacement (BKᵢ).

8. Appareil de localisation selon la revendication 8, **caractérisé en ce que** l'unité d'interprétation (28) présente au moins un algorithme de réduction des perturbations.

9. Procédé d'exploitation d'un appareil de localisation, notamment un appareil de localisation (10) selon l'une des revendications précédentes, comprenant une unité de localisation (12) qui est prévue pour une détection d'une présence d'un objet (16) disposé dans un objet examiné (14) au moyen d'un signal d'examen (18), une unité de détection de déplacement (20) qui est prévue pour détecter au moins une grandeur caractéristique de déplacement (BKᵢ) le long d'au moins un sens de déplacement (22, 24, 26), ainsi qu'une unité d'interprétation (28) qui est prévue pour interpréter ensemble la grandeur caractéristique de déplacement (BKᵢ) et au moins une grandeur caractéristique de localisation (OKᵢ) de l'unité de localisation (12), **caractérisé en ce qu'**une valeur de seuil dynamique est réglée pour une mesure en fonction de la grandeur caractéristique de localisation (OKᵢ) et de la grandeur caractéristique de déplacement (BKᵢ).

10. Procédé selon la revendication 9, **caractérisé en ce que** l'unité de localisation (12) est calibrée au moins partiellement automatiquement.

11. Procédé selon la revendication 9, **caractérisé en ce qu'**une zone d'affichage d'une unité d'affichage (32) est adaptée au moins partiellement automatiquement à une amplitude de mesure.
